# DEMANDE DE BREVET EUROPEEN

(11) **EP 1 469 543 A2**
(43) Date de publication de la demande: **20.10.2004**
(21) Numéro de dépôt: 04290809.5
(22) Date de dépôt: 25.03.2004
(51) Int. Cl.: H01M 8/04

(54) **Procédé et dispositif pour humidifier le gaz oxygéné d'une pile à membrane échangeuse de protons**

(30) Priorité: 08.04.2003 FR 0304351
(71) Demandeur: Peugeot Citroen Automobiles SA, 78140 Vélizy Villacoublay (FR)
(72) Inventeur: Tixier, Franck, 95100 Argenteuil (FR); Sainflou, Damien-Pierre, 95880 Enghien-les-Bains (FR)
(74) Mandataire: Lagrange, Jacques

(57) **Abrégé**

L'invention concerne un procédé d'humidification du gaz oxygéné d'alimentation de la cellule cathodique d'une pile à combustible à membrane échangeuse de protons comportant une cellule cathodique (1) parcourue par un courant de gaz oxygéné un circuit d'alimentation en gaz oxygéné (11) selon lequel, à intervalles successifs, on inverse le sens de circulation du gaz oxygéné dans la cellule cathodique (1) de la pile à combustible en agissant sur le volet (14) d'un distributeur en croix (12) du circuit d'alimentation en gaz oxygéné (11).

## Description

La présente invention concerne une pile à combustible à membrane échangeuse de protons.

Une "pile à combustible" à membrane échangeuse de protons, appelée parfois "système pile" mais qu'on appellera par la suite "pile à combustible", est un dispositif qui produit de l'électricité à partir de la réaction de synthèse de l'eau. Ce dispositif comprend notamment une cellule cathodique séparée d'une cellule anodique par une membrane échangeuse de protons. La cellule cathodique est parcourue par un courant de gaz contenant de l'oxygène, par exemple de l'air, et la cellule anodique est parcourue par un gaz contenant de l'hydrogène, ce gaz pouvant être soit de l'hydrogène pur stocké dans un réservoir conçu à cet effet, soit de l'hydrogène obtenu à partir d'un carburant hydrogéné. Par diffusion à travers la membrane échangeuse de protons, l'hydrogène réagit avec l'oxygène pour former de l'eau dans la cellule cathodique en produisant simultanément de l'électricité qui peut être collectée par des électrodes afin d'être utilisée.

Une pile à combustible comporte également un dispositif de refroidissement destiné à réguler son état thermique afin d'optimiser son fonctionnement, ainsi que des moyens de post traitement des effluents qui ressortent des cellules cathodiques et anodiques. Ces effluents sont d'une part du gaz oxygéné appauvri en oxygène et chargée en eau, provenant de la cellule cathodique, et d'autre part du gaz hydrogéné appauvri en hydrogène, provenant de la cellule anodique.

Enfin, une pile à combustible comporte des moyens pour humidifier le gaz oxygéné, par exemple l'air, qui entre dans cellule cathodique. De tels moyens sont nécessaires pour maintenir une humidité suffisante de la membrane échangeuse de protons, ce qui est indispensable pour conserver un rendement satisfaisant de la pile à combustible.

Il existe plusieurs types de moyens d'humidification, et on distingue les moyens d'humidification indépendants et les moyens d'humidification intégrés à un organe. Les moyens d'humidification indépendants sont par exemple l'échange d'eau à travers une membrane, la pulvérisation d'eau avec un éjecteur, le passage du gaz à travers un corps poreux humide, le bullage du gaz dans l'eau ou une pulvérisation d'eau par ultrasons. L'humidification intégrée à un organe est par exemple l'humidification à l'aide d'une membrane utilisant les premiers éléments de la pile. Il peut s'agir également d'une injection d'eau intégrée au compresseur destiné à alimenter la pile à combustible en gaz oxygéné qui sert alors de refroidissement et qui est surtout utilisé pour les piles fonctionnant avec de forts taux de compression, c'est-à-dire, supérieurs à environ 3 bars. On connaît enfin un moyen d'humidification de la membrane qui consiste à humidifier le fluide hydrogéné en utilisant l'eau du circuit de refroidissement de la pile.

Ces moyens d'humidification de la membrane échangeuse de protons présentent, tous, l'inconvénient de nécessiter l'utilisation d'un circuit d'un stockage d'eau pur. En outre, ils nécessitent en général l'utilisation de dispositifs relativement encombrants et ils peuvent entraîner une consommation d'énergie significative.

Ces inconvénients sont particulièrement gênants lorsque la pile est montée sur un véhicule automobile. En effet, la présence d'un circuit d'eau pure réduit la tenue au froid du véhicule, et l'encombrement réduit la place disponible pour d'autres usages.

On connaît, enfin, un moyen d'humidification de la membrane échangeuse de protons par inversion périodique du sens de circulation du gaz oxygéné en agissant sur un inverseur de sens de circulation du gaz qui a l'inconvénient d'être encombrant ou consommateur d'énergie.

Le but de la présente invention est de remédier à cet inconvénient en proposant un moyen pour humidifier la membrane échangeuse de protons d'une pile à combustible, qui ne nécessite pas l'utilisation d'un réservoir d'eau, qui soit peu encombrant, et qui demande peu d'énergie pour son fonctionnement.

A cet effet, la présente invention a pour objet un procédé d'humidification du gaz oxygéné d'alimentation d'une cellule cathodique d'une pile à combustible à membrane échangeuse de protons comportant au moins une cellule cathodique parcourue par un courant de gaz oxygéné tel que de l'air, une cellule anodique parcourue par un courant de gaz hydrogéné, une membrane échangeuse de protons séparant la cellule cathodique de la cellule anodique, un circuit d'alimentation en gaz oxygéné et un circuit d'alimentation en gaz hydrogéné, selon lequel, à intervalles successifs, on inverse le sens de circulation de gaz oxygéné dans la cellule cathodique de la pile à combustible en agissant sur le volet d'un distributeur en croix du circuit d'alimentation en air.

En outre, on peut, à intervalles réguliers, inverser le sens de circulation du gaz hydrogéné dans la cellule anodique de la pile à combustible.

L'invention a également pour objet une pile à combustible à membrane échangeuse de protons comprenant au moins une cellule cathodique comportant un canal de circulation de gaz oxygéné ayant une première entrée/sortie et une deuxième entrée/sortie, un circuit d'alimentation en gaz oxygéné connecté au canal de circulation de gaz oxygéné dans la cellule cathodique, et pouvant être connecté d'une part à une source de gaz oxygéné et d'autre part à un dispositif de post traitement de gaz oxygéné. Selon l'invention, le circuit d'alimentation en gaz oxygéné est réversible et comprend un moyen pour inverser le sens de circulation du gaz oxygéné dans le canal de circulation de gaz oxygéné dans la cellule cathodique.

Le moyen pour inverse le sens de circulation du gaz oxygéné dans le canal de circulation de gaz oxygéné dans la cellule cathodique est par exemple un distributeur en croix comprenant quatre entrées/sorties et un volet mobile entre deux positions permettant d'inverser le sens de circulation du gaz oxygéné à travers deux entrées/sorties opposées. En outre, la pile à combustible peut comprendre un moyen de commande du volet du distributeur en croix, ce moyen étant par exemple un vérin pneumatique.

Le circuit d'alimentation gaz oxygéné de la pile à combustible comprend, par exemple, une première canalisation de liaison entre une première entrée/sortie du distributeur en croix et la première entrée/sortie du canal de circulation de gaz oxygéné dans la cellule cathodique, une deuxième canalisation de liaison entre un deuxième orifice du distributeur en croix, opposé à la première entrée/sortie du distributeur en croix, et la deuxième entrée/sortie du canal de circulation de gaz oxygéné dans la cellule cathodique.

En outre, la pile à combustible peut comprendre un circuit d'alimentation gaz hydrogéné, réversible et comprenant un distributeur en croix.

L'invention utilise un distributeur pour un circuit de fluides comprenant quatre entrées/sorties disposées en croix autour d'une chambre centrale contenant un volet mobile autour d'un axe perpendiculaire au plan contenant les quatre entrées/sorties ; le volet étant mobile entre deux positions en diagonale par rapport aux quatre entrées/sorties.

De préférence, le corps du distributeur est constitué de deux parties accolées par un plan passant par l'axe de rotation du volet mobile.

De préférence, l'axe du volet se prolonge à l'extérieur du corps du distributeur et porte une biellette coopérant avec un actionneur de façon à pouvoir déplacer le volet entre deux positions.

L'invention va maintenant être décrite plus en détail au regard des figures annexées dans lesquelles :
La figure 1 représente de façon schématique une pile à combustible comportant un circuit d'alimentation en air réversible.
la figure 2 représente schématiquement le fonctionnement d'un circuit d'alimentation en air réversible comprenant un distributeur en croix.
la figure 3A et 3B représente de façon schématique et en coupe un distributeur en croix avec un volet dans chacune des deux positions possibles.
la figure 4 est une vue en perspective d'un distributeur en croix.

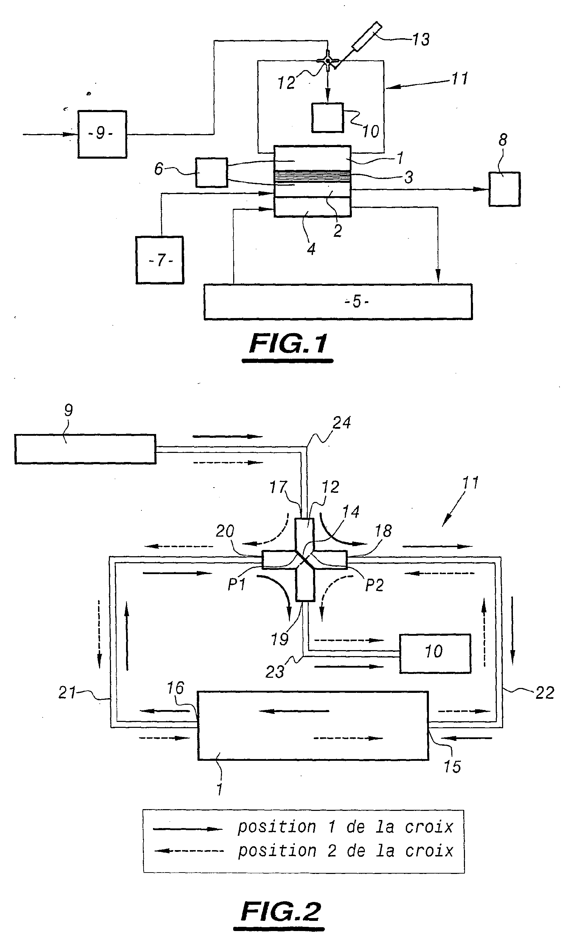

La pile à combustible représentée de façon schématique à la figure 1 comprend une cellule cathodique 1 parcourue par un courant de gaz oxygéné qui est par exemple de l'air, une cellule anodique 2 parcourue par un courant de gaz hydrogéné, une membrane échangeuse de protons 3 qui sépare la cellule cathodique 1 de la cellule anodique 2, et un dispositif de régulation thermique 4 relié à un système de refroidissement 5 connu en lui-même. La pile à combustible fournit de l'électricité pour une utilisation 6 par exemple pour un moteur électrique.

La cellule anodique 2 est alimentée en gaz hydrogéné à partir d'une source gaz hydrogéné 7, et rejette des effluents qui sont envoyés dans un dispositif de post traitement des effluents anodiques 8. La source de gaz hydrogéné est par exemple un réservoir d'hydrogène, ou un reformeur catalytique d'hydrocarbure.

La cellule cathodique 1 comporte un canal de circulation de gaz oxygéné dans la cellule cathodique (non représenté) ayant une première entrée/sortie 15 et une deuxième entrée/sortie 16 (voir figure 2). Elle est alimentée en air à partir d'une source d'air 9 et produit des effluents qui sont envoyés dans un dispositif de traitement des effluents cathodiques 10. La circulation de l'air et des effluents de la cellule cathodique, entre la source d'alimentation en air 9, la cellule cathodique 1, et le dispositif de traitement des effluents de la cellule cathodique 10, est assurée par un circuit de gaz oxygéné repéré généralement par 11. Ce circuit de gaz oxygéné 11 comprend quatre canalisations disposées en croix autour d'un distributeur en croix 12 commandé par un dispositif de commande 13. Le distributeur en croix 12 comporte quatre entrées/sorties repérées respectivement 17, 18, 19 et 20, et disposées en croix. Dans les montages habituels l'une des entrées/sorties ne fait qu'office d'entrée, une autre des entrées/sorties ne fait office que de sortie et les deux entrées/sorties restantes font office d'entrées/sorties de façon réversible. Une première entrée/sortie 17 du distributeur en croix 12 est reliée par une canalisation 24 à la source d'air 9. Une deuxième entrée/sortie 18 du distributeur en croix 12, adjacente à la première entrée/sortie 17 du distributeur en croix 12, est connectée par une canalisation 22 à une première entrée/sortie 15 de la cellule cathodique 1. Une troisième entrée sortie 19 du distributeur en croix 12 adjacente à la deuxième entrée/sortie 18 du distributeur en croix 12, et dans le prolongement de la première entrée/sortie 17 du distributeur en croix 12, est relié par une canalisation 23 au dispositif de post traitement des effluents cathodiques 10. Une quatrième entrée/sortie 20 du distributeur en croix 12, adjacente à la première entrée/sortie 17 et à la troisième entrée/sortie 19, et située dans le prolongement de la deuxième entrée/sortie 18 du distributeur en croix 12, est reliée par une canalisation 21 à la deuxième entrée/sortie 16 de la cellule cathodique 1.

Le distributeur en croix 12 comporte un volet 14 mobile entre une première position P1 et une deuxième position P2, permettant de séparer les entrées/sorties en deux groupes constitués chacun de deux entrées/sorties adjacentes en communication l'une avec l'autre, et cela de deux façons différentes selon que le volet est dans la position P1 ou la position P2. Pour cela, les deux positions P1 et P2 sont des positions en diagonale par rapport aux quatre entrées/sorties du distributeur en croix.

Lorsque le volet 14 du distributeur en croix 12 est dans une première position P1, la circulation de l'air se fait comme l'indiquent les flèches pleines à la figure 2 : l'air part de la source d'air 9 et par la canalisation 24 s'écoule jusqu'à la première entrée/sortie 17 du distributeur en croix 12 ; dans le distributeur en croix 12, l'air passe de la première entrée/sortie 17 à la deuxième entrée/sortie 18 du distributeur en croix, puis s'écoule à travers la canalisation 22 jusqu'à la première entrée/sortie 15 du canal de circulation d'air de la cellule cathodique 1 et ressort de la cellule cathodique 1 par la deuxième entrée/sortie 16 du canal de circulation d'air de la cellule cathodique 1, puis s'écoule dans la canalisation 21 pour aboutir à la quatrième entrée/sortie 20 du distributeur en croix 12 ; à l'intérieur du distributeur en croix 12 l'air s'écoule de la quatrième entrée/sortie 20 vers la troisième entrée/sortie 19, puis s'écoule à travers la canalisation 23 pour aboutir au dispositif de post traitement des effluents cathodiques 10.

Lorsque le volet 14 du distributeur en croix 12 est dans la deuxième position P2, représentée en pointillé à la figure 2, l'air s'écoule dans le circuit d'alimentation en gaz oxygéné 11 selon le circuit décrit par les flèches en pointillé : l'air part de la source d'air 9 et s'écoule dans la canalisation 24 pour arriver à la première entrée/sortie 17 du distributeur en croix 12 ; à l'intérieur du distributeur en croix 12, l'air s'écoule de la première entrée/sortie 17 vers la quatrième entrée/sortie 20 du distributeur en croix 12 ; puis est conduit par la canalisation 21 jusqu'à la deuxième entrée/sortie 16 du canal de circulation de gaz oxygéné dans la cellule cathodique, et ressort de la cellule cathodique 1 par la première entrée/sortie 15 du canal de circulation de gaz oxygéné dans la cellule cathodique ; à la sortie de la cellule cathodique 1, l'air est ramené par la conduite 22 jusqu'à la deuxième entrée/sortie 18 du distributeur en croix 12 ; à l'intérieur du distributeur en croix 12 l'air circule de la deuxième entrée/sortie vers la troisième entrée/sortie 19 du distributeur en croix 12, puis est amenée par la conduite 23 jusqu'au dispositif de post traitement des effluents cathodiques 10.

On voit ainsi que le circuit d'alimentation en gaz oxygéné 11 de la pile à combustible est réversible et que, lorsque le volet 14 du distributeur en croix 12 est dans une première position P1, le canal de circulation de gaz oxygéné dans la cellule cathodique de la pile à combustible est parcouru par l'air dans un sens, et que, lorsque le volet 14 du distributeur en croix 12 est dans une deuxième position P2, il est parcouru en sens inverse.

Avec un tel circuit d'alimentation en gaz oxygéné 11, il est possible de faire fonctionner la pile avec des circulations d'air alternées dans la cellule cathodique 1. Pour cela, il suffit de faire fonctionner la pile à combustible avec le volet 14 du distributeur en croix 12 dans une première position P1 pendant un premier intervalle de temps, puis changer la position du volet 14 du distributeur en croix 12 pour l'amener à la position P2 pendant un deuxième intervalle de temps, puis ramener encore le volet 14 du distributeur en croix 12 dans la première position P1 et le maintenir pendant un certain intervalle de temps, puis le remettre en position P2, et ainsi de suite, de façon à obtenir une circulation de l'air dans le canal de circulation de gaz oxygéné dans la cellule cathodique qui se fasse dans un sens pendant le premier intervalle de temps puis dans le sens opposé pendant le deuxième intervalle de temps puis à nouveau dans le premier sens pendant le troisième intervalle de temps, puis inversé encore et ainsi de suite. Cette circulation alternée de l'air dans la cellule cathodique 1 a l'avantage de régler de façon simple le problème de l'humidification de la membrane échangeuse de protons. En effet, lorsque l'air circule dans un premier sens, et par exemple depuis la première entrée/sortie 15 du canal de circulation de gaz oxygéné dans la cellule cathodique vers la deuxième entrée/sortie 16 du canal de circulation de gaz oxygéné dans la cellule cathodique, l'eau produite par la réaction de synthèse de l'eau est entraînée par le courant d'air et s'accumule vers la zone de la deuxième entrée/sortie 16 du canal de circulation de gaz oxygéné dans la cellule cathodique. Lorsqu'on inverse la circulation de l'air, l'air qui arrive par la deuxième entrée/sortie 16 du canal de circulation de gaz oxygéné dans la cellule cathodique entraîne à l'intérieur de la cellule cathodique l'eau qui s'est accumulée au cycle précédent à proximité de la deuxième entrée/sortie 16, et ainsi humidifie la membrane échangeuse de protons. Simultanément, la deuxième entrée/sortie 16 du canal de circulation de gaz oxygéné dans la cellule cathodique et la cellule cathodique s'assèche et la première entrée/sortie 15 du canal de circulation de gaz oxygéné dans la cellule cathodique se charge en eau. Lorsqu'au bout d'un certain temps, on inverse le sens de circulation de l'air, l'eau accumulée au voisinage de la première entrée/sortie 15 du canal de circulation de gaz oxygéné dans la cellule cathodique est entraînée par le courant d'air et vient humidifier la membrane échangeuse de protons et s'accumuler au voisinage de la deuxième entrée/sortie 16 du canal de circulation de gaz oxygéné dans la cellule cathodique, et ainsi de suite.

Ainsi, en inversant le sens de la circulation d'air dans la cellule cathodique 1 à des intervalles de temps adaptés au mode de fonctionnement instantanée de la pile à combustible, on peut obtenir une humidification optimale permanente de la membrane échangeuse de protons, ce qui conduit à une optimisation du fonctionnement de la pile à combustible.

En complément de l'inversion périodique du sens de circulation de l'air dans la cellule cathodique, on peut également inverser d'une façon périodique le sens de circulation de l'hydrogène dans la cellule anodique, ce qui améliore le rendement de la pile. Pour cela, il suffit que la pile à combustible comporte un circuit d'alimentation en gaz hydrogéné de la cellule anodique identique au circuit d'alimentation en air qui vient d'être décrit. C'est à dire, un circuit comportant un distributeur en croix permettant de faire circuler de façon alternée le gaz hydrogéné dans un sens ou dans l'autre à l'intérieur de la cellule anodique.

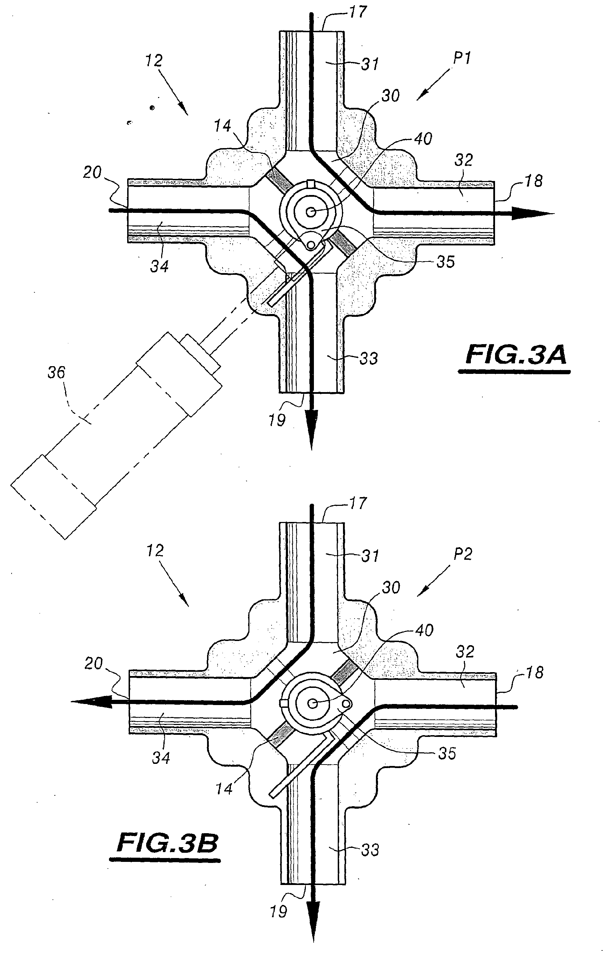

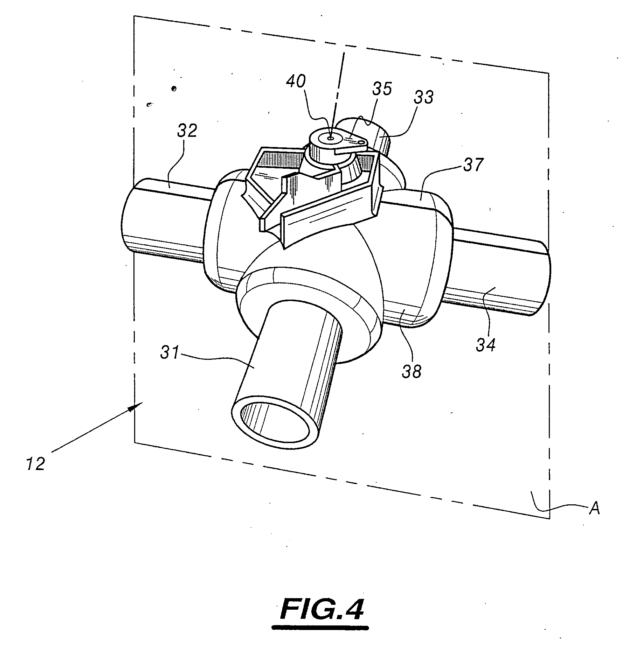

Le distributeur en croix représenté aux figures 3A, 3B et 4 est constitué d'une chambre 30 autour de laquelle sont disposées en croix quatre tubulures de connexion 31, 32, 33 et 34. Chaque tubulure de connexion 31, 32, 33 et 34 comporte une extrémité. Ces extrémités constituent les entrées/sorties 17, 18, 19 et 20 du distributeur en croix. Un volet 14, disposé dans la chambre 30 est mobile autour d'un axe 40 perpendiculaire au plan formé par les quatre tubulures 31, 32, 33 et 34. Le volet 14 peut comporter à sa périphérie un joint d'étanchéité (non représenté). A l'une de ces extrémités, l'axe 40 du volet 14 comporte une biellette 35 qui permet de manipuler le volet 14 et de le faire pivoter d'une position vers une autre position. La biellette 35 peut être mise en mouvement par l'intermédiaire d'un dispositif 36 tel qu'un vérin pneumatique ou un dispositif électromagnétique composé d'une bobine et d'un noyau. De façon alternative, l'axe 40 du volet 14 peut être mis en mouvement par l'intermédiaire d'un moteur électrique associé à un système d'engrenages. Comme on le voit sur la figure 3A, le volet 14, lorsqu'il est dans une première position P1, définit un premier mode de fonctionnement du distributeur en croix dans lequel une première tubulure 31 est en communication avec une deuxième tubulure adjacente 32, et une quatrième tubulure 34 est en communication avec une troisième tubulure adjacente 33. Ainsi comme l'indiquent les flèches, un fluide qui rentre par l'entrée/sortie 17 de la tubulure 31 ressort par l'entrée/sortie 18 de la tubulure 32, et un fluide qui rentre par l'entrée/sortie 20 de la tubulure 34 ressort par l'entrée/sortie 19 de la tubulure 33.

Dans une deuxième configuration P2 représentée à la figure 3B, le volet 14 a pivoté d'un quart de tour par rapport à la position qu'il avait dans la position P1. Dans cette position P2, les tubulures 31 et 32 sont isolées par le volet 14; de même, les tubulures 33 et 34 sont isolées l'une de l'autre par le volet 14. En revanche la tubulure 31 est en communication avec la tubulure 34 et la tubulure 32 est en communication avec la tubulure 33. Dans ces conditions, un fluide qui arrive par l'entrée/sortie 17 de la tubulure 31 ressort par l'entrée/sortie 20 de la tubulure 34 et un fluide qui arrive par l'entrée/sortie 18 de la tubulure 32 ressort par l'entrée/sortie 19 de la tubulure 33.

On constate ainsi que les deux positions P1 et P2 du volet 14 conduisent à des fonctionnements inversés l'un par rapport à l'autre du distributeur en croix.

D'une façon générale, le volet 14 permet de mettre en communication les tubulures adjacentes par groupes de deux, isolés l'un de l'autre, et cela de deux façons différentes, selon la position dans laquelle il se trouve.

Afin de faciliter sa fabrication, le distributeur en croix peut être constitué de deux coquilles 37 et 38 obtenues par moulage et assemblées par l'intermédiaire de vis non représentées. Chacune des coquilles 37 ou 38 correspond à un demi distributeur en croix obtenu en coupant le distributeur en croix par un plan passant d'une part par l'axe 40 de rotation du volet 14 et d'autre part, par l'axe de deux tubulures opposées 34 et 32 par exemple. Ainsi, pour monter le distributeur en croix on peut procéder de la façon suivante : on prend une demi coquille 38 par exemple, on dispose dans cette demi coquille le volet 14 avec son axe, puis on dispose par dessus la deuxième demi coquille 37 et l'on referme ainsi le distributeur en croix, puis on fixe ensemble les demi coquilles 37 et 38 par l'intermédiaire de moyens de fixation tels que des vis.

Le distributeur en croix qui vient d'être décrit présente l'avantage d'être très simple, d'engendrer très peu de pertes de charges et de demander très peu d'énergie pour pouvoir être utilisé. Enfin, il permet de concevoir des circuits réversibles, simples et peu encombrants. Il peut être constitué de tout matériau électrochimiquement stable et inoxydable, tel que les plastiques noir utilisés pour les doseurs d'air d'alimentation des moteurs d'automobile.

## Revendications

1. Procédé d'humidification du gaz oxygéné d'alimentation de la cellule cathodique d'une pile à combustible à membrane échangeuse de protons comportant une cellule cathodique (1) parcourue par un courant de gaz oxygéné, une cellule anodique (2) parcourue par un courant de gaz hydrogéné, une membrane échangeuse de protons (3) séparant la cellule cathodique de la cellule anodique, un circuit d'alimentation en gaz oxygéné (11) et un circuit d'alimentation en gaz hydrogéné **caractérisé en ce qu'**à intervalles successifs, on inverse le sens de circulation du gaz oxygéné dans la cellule cathodique (1) de la pile à combustible en agissant sur le volet d'un distributeur en croix (12) du circuit d'alimentation en gaz oxygéné (11).

2. Procédé selon la revendication 1 **caractérisé en ce que**, en outre, à intervalles réguliers, on inverse le sens de circulation du gaz hydrogéné dans la cellule anodique (2) de la pile à combustible.

3. Procédé selon l'une quelconque des revendications 1 à 2 **caractérisé en ce que** le gaz oxygéné est de l'air.

4. Pile à combustible à membrane échangeuse de protons comprenant une cellule cathodique (1) comportant un canal de circulation de gaz oxygéné dans la cellule cathodique, pour la circulation d'un gaz oxygéné tel que de l'air, ayant une première entrée/sortie (15) et une deuxième entrée/sortie (16), un circuit d'alimentation en gaz oxygéné (11) connecté au canal de circulation de gaz oxygéné dans la cellule cathodique et pouvant être connecté d'une part à une source de gaz oxygéné (9) et d'autre part à un dispositif de post traitement de gaz oxygéné (10), **caractérisé en ce que** le circuit d'alimentation en gaz oxygéné (11) est réversible et comprend un moyen pour inverser le sens de la circulation du gaz oxygéné dans le canal de circulation de gaz oxygéné dans la cellule cathodique (1), le moyen pour inverser le sens de circulation du gaz oxygéné dans le canal de circulation de gaz oxygéné dans la cellule cathotique est un distributeur en croix (12) comprenant quatre entrées/sorties (17, 18, 19, 20) et un volet (14) mobile entre deux positions (P1, P2) permettant d'inverser le sens de la circulation du gaz oxygéné dans deux entrées/sorties opposées (18, 20) du distributeur en croix.

5. Pile à combustible selon la revendication 4 **caractérisé en ce qu'**elle comprend en outre un moyen de commande (13) du volet (14) du distributeur en croix (12), ce moyen étant par exemple un vérin pneumatique.

6. Pile à combustible selon l'une quelconque des revendications 4 à 5 **caractérisé en ce que** le circuit d'alimentation en gaz oxygéné (11) comprend une première canalisation (22) de liaison entre une première entrée/sortie (18) du distributeur en croix (12) et la première entrée/sortie (15) du canal de circulation de gaz oxygéné de la cellule cathodique (1), une deuxième canalisation (21) de liaison entre une deuxième entrée/sortie (20) du distributeur en croix (12) opposée à ladite première entrée/sortie (18) du distributeur en croix (12), et ladite deuxième entrée/sortie (16) du canal de circulation de gaz oxygéné dans la cellule cathodique (1).

7. Pile à combustible selon la revendication 6 **caractérisé en ce que** le circuit d'alimentation en air (11) comprend une canalisation de liaison (24) entre une source de gaz oxygéné (9) et une troisième entrée/sortie (17) du distributeur en croix (12) et/ou une canalisation de liaison (23) entre un dispositif de post traitement de gaz oxygéné (10) et une quatrième entrée/sortie (19) du distributeur en croix (12).

8. Pile à combustible selon l'une quelconque des revendications 4 à 7 **caractérisé en ce que** le circuit d'alimentation en gaz hydrogéné est réversible et comprend un distributeur en croix.
